# EUROPEAN PATENT SPECIFICATION

(11) **EP 1 774 749 B1**
(45) Date of publication and mention of the grant of the patent: **14.11.2012**
(21) Application number: 05775125.7
(22) Date of filing: 21.07.2005
(51) Int. Cl.: H04L 29/06

(54) **METHODS AND APPARATUS FOR HYBRID MULTIMEDIA PRESENTATIONS**
VERFAHREN UND VORRICHTUNGEN FÜR HYBRIDE MULTIMEDIA-PRÄSENTATIONEN
PROCEDE ET APPAREIL DESTINES A DES PRESENTATIONS MULTIMEDIA HYBRIDES

(30) Priority: 21.07.2004 US 590128 P
(43) Date of publication of application: 18.04.2007
(73) Proprietor: Qualcomm Incorporated, San Diego, CA 92121 (US)
(72) Inventor: JACOBS, Paul E., La Jolla, CA 92037 (US); WALKER, Gordon Kent, Poway, CA 92064 (US); CHANDHOK, Ravinder, Poway, CA 92064 (US)
(74) Representative: Heselberger, Johannes
(86) International application number: PCT/US2005/025896
(87) International publication number: WO 2006/012427

(56) References cited:
- US-A1- 2002 169 540
- US-A1- 2004 025 174

## Description

The present Application for Patent claims priority to Provisional Application No. 60/590,128 entitled "APPARATUS AND METHOD FOR PRESENTATIONS IN A HYBRID MULTIMEDIA" filed July 21, 2004, and assigned to the assignee hereof.

### BACKGROUND

### Field

The present invention relates generally to the operation of data networks, and more particularly, to methods and apparatus for providing hybrid multimedia presentations on a device.

### Background

Data networks, such as wireless communication networks, have to trade off between services customized for a single terminal and services provided to a large number of terminals. For example, the distribution of multimedia content to a large number of resource-limited portable devices (subscribers) is a complicated problem. Therefore, it is very important for network administrators, content retailers, and service providers to have a way to distribute content and/or other network services in a fast and efficient manner for presentation on networked devices.

In current content delivery/media distribution systems, streaming real-time media is used to deliver content to a large number of devices. For example, streaming real-time media reduces the total memory required at the playback device and is; therefore, suitable for use with portable devices having limited memory resources. However, streaming real-time media usually requires some amount of acquisition time, and device users may choose to tune away during commercials in the real-time media. Additionally, significant bandwidth may be used transmit the same content, such as advertising, over and over again.

US 2002/169540 A1 discloses a method of inserting advertisements into broadcast content being played on a mobile device. US 2004/025174 A1 discloses the storing of advertisements in a device where, in order to promote advertisement viewing by users, a minimum level of voluntary viewing is included within the viewer's contract.

It is also possible for content delivery/media distribution systems to utilize caching to distribute non real-time media to a large number of devices. Cached non real-time media starts very quickly thereby overcoming the problem of slow acquisition time. Unfortunately, the caching technique may require that the entire non real-time presentation be cached prior to playback, which means that the playback device needs to have significant memory resources. As a result, caching large media presentations may not be suitable for use with resource limited portable devices.

Therefore, what is needed is a way to deliver a selected arrangement of real-time and non real-time media to a large number of devices that overcomes the problems associated with bandwidth utilization, media acquisition times, and device resource requirements. It would also be desirable to target selected subscribers to receive and render a selected arrangement or sequence of content based operational parameters, such as user subscription activity.

### SUMMARY

In one or more embodiments, a hybrid presentation system is provided that operates to render real-time and non real-time content on a device based on a variety of operational conditions. For example, the system operates to determine a particular arrangement, sequence, mixing, and/or selection of real-time and non-real-time content for presentation on a targeted device based on the occurrence of one or more presentation events.

In one embodiment, cached content items are linked to real-time media services to provide a crisp user experience on a device that otherwise might have sluggish interactivity. Selected content items, such as interface screens, advertisements, or other information items are cached so that minimal data transfers are needed for a transaction. Thus, device users perceive fast response and start-up times, and content retailers are able to easily and efficiently insert advertisements and other information into real-time services.

In one embodiment, a method is provided for rendering hybrid presentations. The method comprises caching one or more content items, and detecting a presentation event associated with a real-time service. The method also comprises retrieving a selected content item from the one or more content items based on the presentation event, and rendering the selected content item.

In one embodiment, an apparatus is provided for rendering hybrid presentations. The apparatus comprises memory configured to cache one or more content items, and client application logic configured to detect a presentation event associated with a real-time service, and to retrieve selected content item from the one or more content items based on the presentation event. The apparatus also comprises rendering logic configured to render the selected content item.

In one embodiment, an apparatus is provided for rendering hybrid presentations. The apparatus comprises means for caching one or more content items, and means for detecting a presentation event associated with a real-time service. The apparatus also comprises means for retrieving a selected content item from the one or more content items based on the presentation event, and means for rendering the selected content item.

In one embodiment, a computer-readable medium is provided that comprises instructions, which when executed by processing logic, operate to render hybrid presentations. The computer-readable medium comprises instructions for caching one or more content items and instructions for detecting a presentation event associated with a real-time service. The computer-readable medium also comprises instructions for retrieving a selected content item from the one or more content items based on the presentation event and instructions for rendering the selected content item.

In one embodiment, at least one processor is provided that is configured to perform a method for rendering hybrid presentations. The method comprises caching one or more content items and detecting a presentation event associated with a real-time service. The method also comprises retrieving a selected content item from the one or more content items based on the presentation event and rendering the selected content item.

In one embodiment, a method is provided for rendering hybrid presentations. The method comprises generating system information parameters for one or more real-time services, wherein the system information parameters associate a presentation event with a cacheable content item, and transmitting the system information parameters.

In one embodiment, an apparatus is provided for rendering hybrid presentations. The apparatus comprises logic for generating system information parameters for one or more real-time services, wherein the system information parameters associate a presentation event with a cacheable content item, and logic for transmitting the system information parameters.

Other aspects of the embodiments will become apparent after review of the hereinafter set forth Brief Description of the Drawings, Detailed Description, and the Claims.

### BRIEF DESCRIPTION OF THE DRAWINGS

The foregoing aspects of the embodiments described herein will become more readily apparent by reference to the following detailed description when taken in conjunction with the accompanying drawings wherein:

**FIG.1** shows one embodiment of a network that comprises one embodiment of a hybrid presentation system;

**FIG. 2** shows a detailed diagram of one embodiment of a server suitable for use in one or more embodiments of a hybrid presentation system;

**FIG. 3** shows one embodiment of cacheable content for use in one or more embodiments of a hybrid presentation system;

**FIG. 4** shows one embodiment of system information for use in one or more embodiments of a hybrid presentation system;

**FIG. 5** shows one embodiment of a method for operating a server in one embodiment of a hybrid presentation system;

**FIG. 6** shows a detailed diagram of one embodiment of a device suitable for use in one or more embodiments of a hybrid presentation system;

**FIG. 7** shows one embodiment of a method for operating a device in one embodiment of a hybrid presentation system; and

**FIG. 8** shows one embodiment of a method for operating a device to detect a presentation event in one embodiment of a hybrid presentation system.

### DETAILED DESCRIPTION

In one or more embodiments, a hybrid presentation system is provided that operates to render hybrid presentations on a device. For example, hybrid presentations comprise a particular arrangement, sequence, mixing, and/or selection of real-time and/or non-real-time content for presentation on a targeted device. The system is especially well suited for use in wireless network environments, but may be used in any type of network environment, including but not limited to, communication networks, public networks, such as the Internet, private networks, such as virtual private networks (VPN), local area networks, wide area networks, long haul networks, or any other type of data network.

The following definitions are used herein to describe one or more embodiments of a hybrid presentation system.
- Service: A service comprises a sequence of media presentations that represents the smallest element that may be subscribed to by a device.
- Tier: A tier is a collection of one or more services.
- Package: A package (or "Service Package") comprises any combination of services and/or tiers that are offered on a subscription basis.

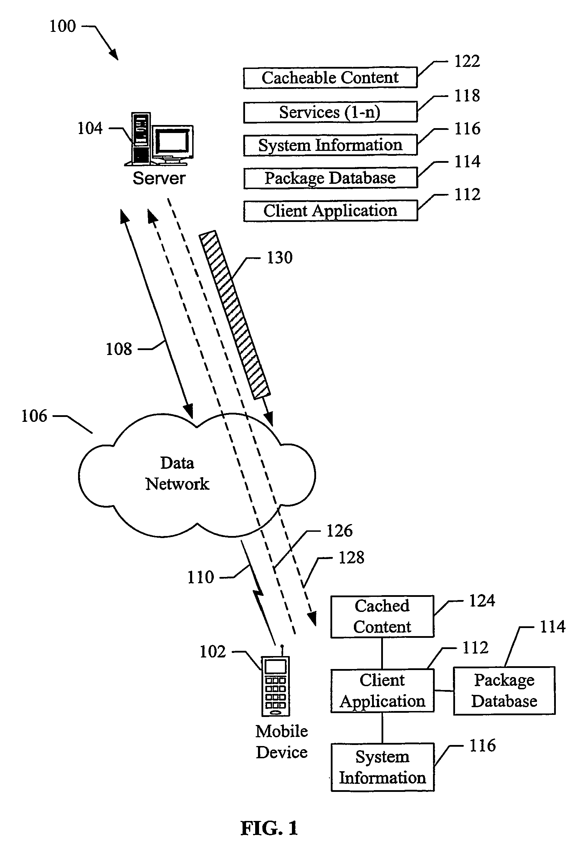

**FIG. 1** shows one embodiment of a network 100 that comprises one embodiment of a hybrid presentation system. The network **100** comprises a mobile device **102,** a server **104,** and a data network **106.**

In one embodiment, the server **104** operates to provide services that may be subscribed to by devices in communication with the network **106.** The server **104** is coupled to the network **106** through the communication link **108.** The communication link **108** comprises any suitable communication link, such as any combination of wired and/or wireless links that operates to allow the server **104** to communicate with the network **106.** The network **106** comprises any combination of wired and/or wireless networks that allows services to be delivered from the server **104** to devices in communication with the network **106,** such as the device **102.**

The device **102** in this embodiment comprises a mobile telephone that communicates with the network **106** through the wireless link **110.** It should be noted that other devices are possible within the scope of the embodiments. For example, other devices suitable for use in one or more embodiments of the hybrid presentation system include, but are not limited to, a personal digital assistant (PDA), email device, pager, a notebook computer, mp3 player, video player, or a desktop computer. The wireless link **110** comprises any suitable wireless communication link that operates to allow the device **102** to communicate with the network **106.** The device **102** may also communicate with the network **106** utilizing a wired communication link.

The device **102** takes part in an activation process that allows the device **102** to subscribe to receive services over the network **106.** In one embodiment, the activation process may be performed with the server **104;** however, the activation process may also be performed with another server, service provider, content retailer, or any other entity. For the purpose of this description, it will be assumed that the device 102 performs the activation process with the server **104.**

As part of the activation process, the device **102** provides a device identifier, manufacturer identifier, subscriber identifier, and/or any other information that may be used to authenticate/authorize the device **102** to subscribe to receive services from the server **104.** After activation, the server **104** transmits a client application **112,** a package database **114,** and system information **116** to the device **102.** It should be noted that in other embodiments, any of the client application **112,** package database **114,** and system information **116** may be transmitted to the device from another network entity, installed on the device during device manufacture, or downloaded from a local storage medium and activated as a result of the activation process.

The package database **114** comprises information that describes services that are available to which the device **102** may subscribe to receive. The client application **112** executes on the device **102** and processes the package database **114** to provide an interactive program guide that displays information about available services to the device user. The system information **116** comprises information relating to the available services, such as required device resources, associated cached content identifiers, or other system information.

In one embodiment, the server **104** comprises one or more services **118,** and cacheable content **122.** For example, the services **118** comprise multimedia content that includes news, sports, weather, financial information, movies, and/or applications, programs, scripts, or any other type of suitable content or service.

In one embodiment, the cacheable content **122** comprises content that may be rendered on a device. For example, the cacheable content **122** may comprise games or other applications, commercials, content plot variants based on user input with temporal significance, or other information having the ability to open essentially arbitrary file types, all of which may be rendered or executed on the device **102.** For example, in one embodiment, the cacheable content **122** may comprise non-real-time content clips representing advertisements or other multimedia content.

In one embodiment, the system information **116** comprises information that associates content in the cacheable content **122** with one or more of the services **118.** For example, the system information **124** associates one or more content clips that are part of the cacheable content **122** to a selected service that is part of the services **118.**

In one embodiment, the cacheable content **122** is delivered over the network **106** from the server **104** to the device **102.** For example, the cacheable content **122** is delivered to the device **102** and is stored as cached content **124** at the device **102.** The cacheable content **122** is associated with the services that are available to the device **102.**

It should be noted that the elements of the server **104** might be updated to reflect changes in the available information. For example, the services **118,** system information **116,** or cacheable content **122** may be updated or changed as necessary. When these changes occur, the server **104** operates to deliver the most recent information to the device **102.** For example, the system information **116** may be transmitted to the device **102** according to a predefined schedule so that updates to the system information **116** may be received by the device within a selectable time interval. Furthermore, the delivery of information from the server **104** to the device **102** may be performed in the background using an "invisible service" that is part of the system but is not listed as an available service in the interactive program guide.

In one embodiment, the hybrid presentation system operates to perform one or more of the following functions to provide hybrid presentations at the device **102.**
1. Render content that is part of the cached content **124** when the device **102** attempts to acquire a real-time service.
2. Render content that is part of the cached content **124** when the device exits a real-time service.
3. Render content that is part of the cached content **124** upon selected user activity. For example, the user activity may be based on the subscription status of the device or selected actions taken by the device user that do not include entry or exit from a real-time service.

In one embodiment, the hybrid presentation system renders a selected portion of the cached content **124** when the device **102** attempts to acquire a real-time service. For example, the client application **112** processes the package database **114** to provide the device user with a listing of available services. When the device user selects a particular service to receive, the client application **112** accesses information in the system information **116** that is associated with the selected service. The information in the system information **116** identifies selected content of the cached content **124** that is to be rendered when the device attempts to acquire the selected real-time service. The client application **112** then retrieves the selected content from the cached content **124** and renders it on the device. For example, the selected cached content may be an introduction for the service that is to be joined. The client application **112** then transmits a request **126** to the server **104** to acquire the selected service **130.** The server responds by transmitting the selected service **130** to the device, as shown by path **128.**

In one embodiment, the hybrid presentation system renders a selected portion of the cached content **124** when the device **102** attempts to exit a real-time service. Assuming the device is receiving a real-time service from the server **104,** the device user may optionally choose to cancel or exit the service. For example, the device user may interact with the client application **112** to select one or more services to be exited, terminated, or unsubscribed. The client application **112** accesses information in the system information **116** that is associated with the selected service. The information in the system information **116** identifies content in the cached content **124** that is to be rendered when the device attempts to exit the selected real-time service. The client application **112** then retrieves the identified content from the cached content **124** and renders it on the device. For example, the content may be a summary of the service that is to be exited. The client application **112** then transmits a request to the server **104** to exit the selected service. The server **104** responds by terminating the transmission of the selected service to the device **102.**

In one embodiment, the hybrid presentation system renders a selected portion of the cached content **124** in response to a selected user activity by the device user that does not include entry or exit from a real-time service. For example, assuming the device is receiving a real-time service, the device user may input information in response to pop-ups, information requests, or provide any other user action. Based on the user action, the client application **112** accesses information in the system information **116** that is associated with the selected user action. The information in the system information **116** identifies content in the cached content **124** that is to be rendered. The client application **112** then retrieves the content from cached content **124** and renders it on the device **102.** For example, the content may be an advertisement based on the type of services or subscriptions associated with the device **102.**

In one embodiment, the user activity is determined from the subscription status of the device. For example, the system information **116** contains subscription status information that is processed by the client application **112** to determine if selected conditions have been met. For example, the subscription status comprises information about the types of services subscribed to by the device, and may also comprise conditions based on a user profile, demographics associated with the device user, or any other type of subscription status information. Based on the subscription status, the client application **112** accesses information in the system information **116** that identifies content in the cached content **124** that is to be rendered. The client application **112** then retrieves the content from cached content **124** and renders it on the device **102.** For example, the content may be an advertisement based on the type of services or subscriptions associated with the device **102.**

Therefore, in one or more embodiments, a hybrid presentation system operates to provide hybrid presentations comprising a particular arrangement, sequence, mixing, and/or selection of real-time and non-real-time content for presentation on a device. It should be noted that the hybrid presentation system is not limited to the implementations described with reference to **FIG.1****,** and that other implementations are possible within the scope of the embodiments.

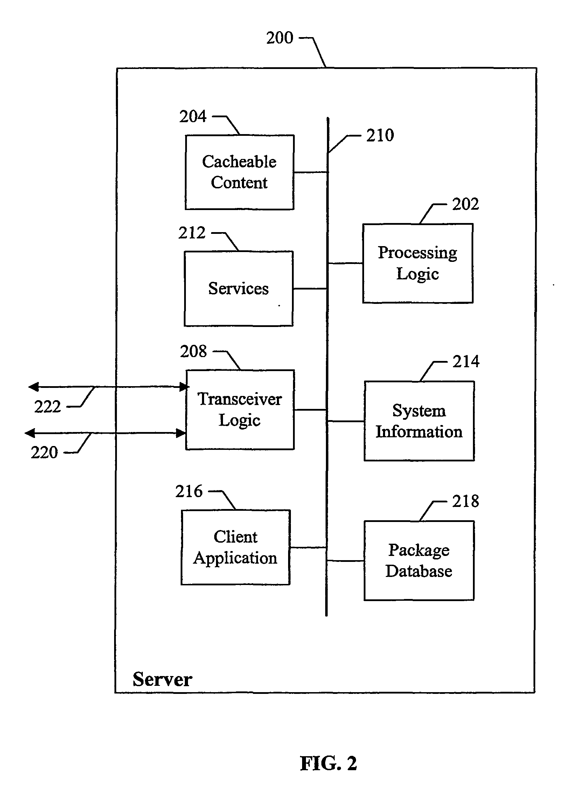

**FIG. 2** shows a detailed diagram of one embodiment of a server **200** suitable for use in one or more embodiments of a hybrid presentation system. For example, the server **200** may be used as the server **104** in **FIG. 1****.** The server **200** comprises processing logic **202,** cacheable content **204,** and transceiver logic **208,** all coupled to an internal data bus **210.** The server **200** also comprises services **212,** system information **214,** client application **216** and package database **218.**

In one or more embodiments, the processing logic **202** comprises a CPU, processor, gate array, hardware logic, memory elements, virtual machine, software, and/or any combination of hardware and software. Thus, the processing logic **202** generally comprises logic to execute machine-readable instructions and to control one or more other functional elements of the server **200** via the internal data bus **210.**

The cacheable content **204** comprises one or more content items to be distributed to devices over a data network. For example, the cacheable content **204** comprises a plurality of content items that are to be distributed over a data network for caching at one or more devices. In one or more embodiments, the cacheable content **204** comprises games or other applications, commercials, content plot variants, or other information having the ability to open essentially arbitrary file types, all of which may be rendered or executed on a device.

The services **212** comprise any type of real-time services including, but not limited to, multimedia presentations, news, sports, weather, financial information, and/or any other type of real-time services.

The transceiver logic **208** comprises hardware and/or software that operate to allow the server **200** to transmit and receive data and/or other information over a network connection. In one embodiment, the transceiver logic **208** comprises logic configured to provide a unicast communication channel **220** that provides any suitable type of unicast communication link to allow the server **200** to communicate with a device through a unicast transmission. In one embodiment, the transceiver logic **208** comprises logic configured to provide a multicast communication channel **222** that provides any suitable type of multicast communication link to allow the server **200** to communicate with one or more devices using a multicast transmission.

The package database **218** comprises information that describes the available service packages. For example, the package database **218** includes package and service descriptions, identifiers, pricing, scheduling and any other suitable information about available services and packages.

The client application **216** comprises a program or other type of executable that executes on a device to process the package database **218** to provide an interactive program guide to a device user. The interactive program guide allows the device user to see available services and make subscription selections.

The system information **214** comprises information pertaining to the services **212.** For example, the system information **214** comprises resource identifiers, content identifiers, or any other system information associated with services that are available to a device. In one embodiment, the processing logic **202** operates to generate the system information parameters.

In one embodiment, devices go through an activation process with the server **200** in order to subscribe to receive one or more services **212** from the server **200.** After the activation process, the server **200** transmits the client application **216,** package database **218** and system information **214** to the activated devices.

During operation of one or more embodiments of a hybrid presentation system, the server **200** transmits a portion of the cacheable content **204** over a data network to be cached at the device. In one embodiment, the portion of the cacheable content **204** is transmitted to the device **102** as part of an invisible service. For example, in one embodiment, the cacheable content **204** is transmitted to the device by the transceiver logic **208** in a unicast transmission provided by the channel **220.**

In one embodiment, the hybrid presentation system comprises program instructions stored on a computer-readable media, which when executed by a processor, for instance, the processing logic **202,** provides the functions of the server **200** described herein. For example, instructions may be loaded into the server **200** from a computer-readable media, such as a floppy disk, CDROM, memory card, FLASH memory device, RAM, ROM, or any other type of memory device or computer-readable media. In another embodiment, the instructions may be downloaded into the server **200** from an external device or network resource that interfaces to the server **200** via the transceiver logic **208.** The instructions, when executed by the processing logic **202,** provide one or more embodiments of a hybrid presentation system as described herein. It should be noted that the server **200** is just one implementation and that other implementations are possible within the scope of the embodiments.

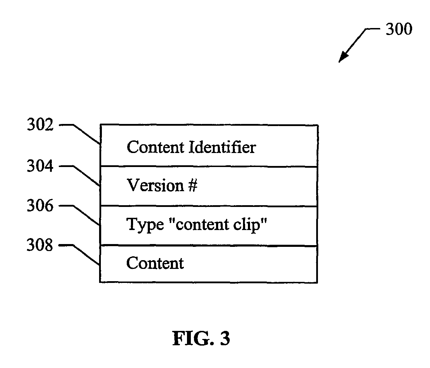

**FIG. 3** shows one embodiment of cacheable content **300** for use in one or more embodiments of a hybrid presentation system. For example, one or more instances of the cacheable content **300** are suitable for use as the cacheable content **204** shown in **FIG. 2****.** The cacheable content **300** comprises a content identifier **302,** version indicator **304,** type indicator **306,** and actual content **308.**

The content identifier **302** identifies the content **308.** The version indicator **304** indicates the particular version of the content **308.** The type indicator **306** indicates a type characteristic of the content **308.** For example, the type indicator **306** may indicate that the content is a content clip, pop-up, script, program, or any other content type. The content **308** represents the actual content that is to be rendered on a device.

In one embodiment of a hybrid presentation system, one or more instances of the cacheable content **300** are transmitted and cached at a receiving device. The cached content **308** is then rendered on the device in response to on one or more operational conditions and/or presentation events. It should be noted that the format of the cacheable content **300** may be of any suitable type, and that the cacheable content **300** may also be encoded or encrypted using any suitable technique or technology.

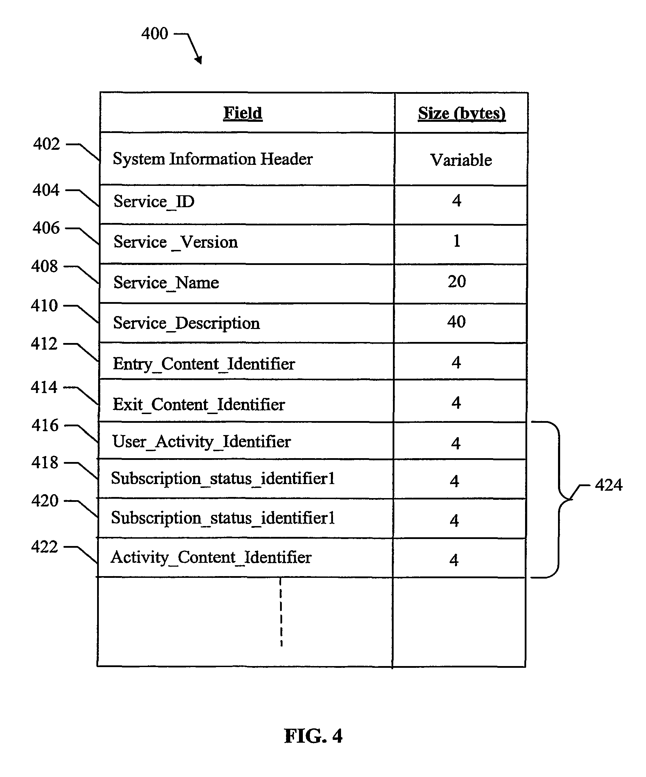

**FIG. 4** shows one embodiment of system information **400** for use in one or more embodiments of a hybrid presentation system. For example, the system information **400** is suitable for use as the system information **214** shown in **FIG. 2****.** In one embodiment, the system information **400** is assembled, updated, changed and/or otherwise maintained by the processing logic **202.**

The system information **400** comprises one or more instances of a header **402,** service identifier **404,** service version indicator **406,** service name **408,** service description **410,** entry content identifier **412,** and exit content identifier **414.** The system information **400** also comprises one or more instances of user activity parameters **424** that comprise a user activity identifier **416,** subscription status identifiers **(418, 420)** and a content identifier **422.**

The header **402** provides information identifying the system information **400,** its version, or other information pertaining to the system information **400.** The service identifier **404,** version **406,** name **408,** and description **410** describe and identify a particular service. The entry content identifier **412** identifies content that is to be rendered when the identified service is obtained or joined. The exit content identifier **414** identifies content that is to be rendered when the identified service is exited, terminated, or unsubscribed.

The user activity identifier **416** identifies a specific user action with respect to the identified service **404.** For example, the user action may be a response to a pop-up or other information request. The subscription status identifiers **(418, 420)** describe selected subscription status information. For example, the subscription status information may identify services to which the device may be subscribed.

The content identifier **422** identifies content to be rendered based upon the occurrence of the user activity parameters **424.** In one or more embodiments, the system information **400** may comprise multiple instances of the user activity parameters **424** so that various predefined user activities can be associated with selected cached content. It should be noted that the format of the system information **400** may be of any suitable type and that it may also be encoded or encrypted using any suitable technique or technology.

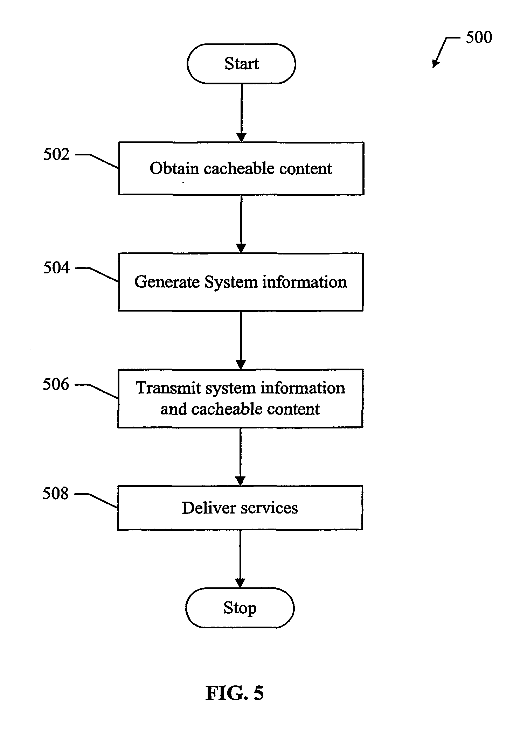

**FIG. 5** shows one embodiment of a method **500** for operating a server in one embodiment of a hybrid presentation system. For clarity, the method **500** will be described with reference to the server **200** shown in **FIG. 2****.** In one or more embodiments, the processing logic **202** executes program instructions and controls the operation of the server **200** to perform the functions described below. It will be assumed that the server **200** has activated one or more devices and has transmitted the client application **216** and package database **218** to those devices.

At block **502,** the server obtains cacheable content that is associated with one or more services that are available. For example, the server **200** obtains the cacheable content **204** from a content retailer, service provider, or any other content provider. In one embodiment, the cacheable content **204** comprises non-real-time content clips, such as advertisements.

At block **504,** system information parameters are generated. In one embodiment, the processing logic **202** operates to generate parameters for inclusion in the system information **214.** For example, the processing logic **202** generates the system information parameters as shown in **FIG. 4** that include entry content identifiers **412,** exit content identifiers **414,** and user activity parameters **424.** The content identifiers identify content cached at a device that is to be rendered upon the occurrence of one or more presentation events.

At block **506,** cacheable content and system information is transmitted to one or more devices. For example, in one embodiment, the processing logic **202** transmits the cacheable content **204** and the system information **214** to a device utilizing the channel **222** of the transceiver logic **208.**

At block **508,** services are transmitted over a data network. In one embodiment, the services are subscribed to by one or more devices. When one or more presentation events related to a delivered service occurs at a device, selected cached content identified in the system information at the device is rendered.

It should be noted that the method **500** illustrates just one implementation and that changes, additions, deletions, or rearrangements of the described functions may be made without deviating from the scope of the described embodiments.

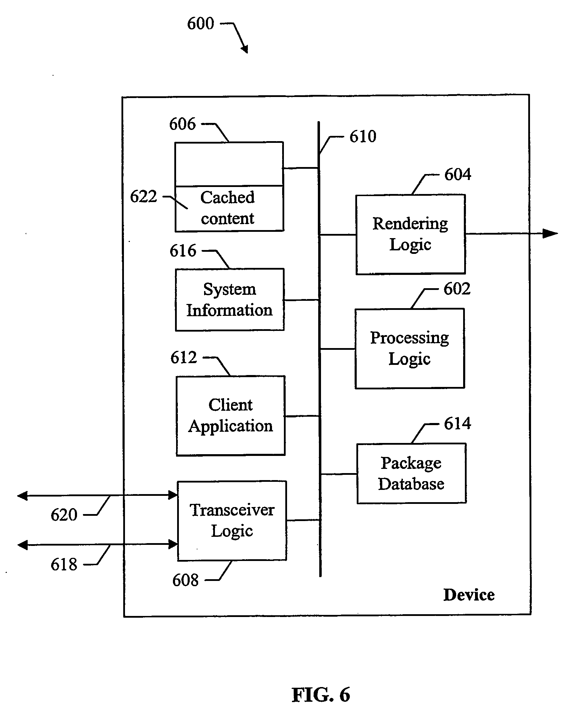

**FIG. 6** shows a detailed diagram of one embodiment of a device **600** suitable for use in one or more embodiments of a hybrid presentation system. For example, the device **600** may be used as the device **102** in **FIG. 1****.** The device **600** comprises processing logic **602,** rendering logic **604,** memory **606,** and transceiver logic **608** all coupled to an internal data bus **610.** The device also comprises client application logic **612,** package database **614,** and system information **616.**

In one or more embodiments, the processing logic **602** comprises a CPU, processor, gate array, hardware logic, memory elements, virtual machine, software, and/or any combination of hardware and software. Thus, the processing logic **602** generally comprises logic to execute machine-readable instructions and to control one or more other functional elements of the device **600** via the internal data bus **610.**

The rendering logic **604** comprises hardware and/or software that allow the device **600** to render content. For example, the rendering logic **604** may comprise audio logic, video logic, display systems, user interface logic and/or any other suitable hardware and/or software to allow the device to render content and to receive device inputs, such as input from a device user.

The memory **606** comprises any type of memory device suitable for storing information and content. For example, the memory **606** may operate as a cache memory to store content for subsequent rendering on the device **600.**

The transceiver logic **608** comprises hardware and/or software that operate to allow the device **600** to transmit and receive data and/or other information with remote devices or network systems. In one embodiment, the transceiver logic **608** comprises logic configured to provide communications through a unicast communication channel **618.** For example, in one embodiment, the communication channel **618** provides any suitable type of unicast link to allow the device **600** to communicate with one or more data networks. In one embodiment, the transceiver logic **608** comprises logic configured to provide communications through a multicast communication channel **620.** For example, in one embodiment, the communication channel **620** provides any suitable type of multicast link to allow the device **600** to communicate with one or more data networks.

During operation, the device **600** activates with a server on a data network so that the device **600** may subscribe to receive available services. In on embodiment, the device **600** receives the client application **612,** package database **614** and system information **616** from the server. The device also receives cacheable content, which is stored in the memory **606** as cached content **622.** In one embodiment, the device **600** receives the above information through the transceiver logic **608** using the unicast communication channel **618.**

In one embodiment, the client application **612** comprises any type of program or executable that executes on the device **600** to process the package database **614** and provide an interactive program guide to the device user. The client application **612** controls the rendering logic **604** to render the interactive program guide. The interactive program guide provides information about available services to the device user. The device user may then select one or more services to receive.

In one embodiment, a presentation event is detected by the client application **612.** A presentation event is an event that operates to cause selected content in the cached content **622** to be rendered on the device. In one or more embodiments, a presentation event comprises one or more of the following events.
1. The device attempts to join or obtain a service.
2. The device attempts to exit or terminate a service.
3. A user activity is detected that is not part of joining or exiting a service.

In one embodiment, a presentation event occurs when the device attempts to join or obtain a selected service. For example, in one embodiment, the device user selects a service to join from the interactive program guide. The client application **612** operates to process information in the system information **610** associated with the selected service. The system information **610** comprises an entry content identifier that identifies cached entry content that is to be rendered. In one embodiment, the entry content is part of the cached content **622.** The client application **612** then retrieves the identified entry content from the cached content **622** and renders it on the device **600** using the rendering logic **604.** The client application **612** then operates to control the transceiver logic to obtain the selected service. For example, the service may be received as a multicast transmission using the communication channel **620.** Thus, in one embodiment of a hybrid presentation system, selected content from the cached content **622** is rendered when the device attempts to join or obtain a service.

In one embodiment, a presentation event occurs when the device attempts to exit or terminate a selected service. For example, in one embodiment, the device user selects a service to exit from the interactive program guide. For example, the device **600** is currently subscribed to receive the selected service. The client application **612** operates to process information in the system information **610** associated with the selected service. The system information **610** identifies an exit content identifier that identifies exit content that is to be rendered for the selected service. In one embodiment, the exit content is part of the cached content **622.** The client application logic **612** then retrieves the identified exit content from the cached content **622** and renders it on the device **600** using the rendering logic **604.** The client application logic **612** then operates to transmit a request to a server to exit the selected service. For example, the request is transmitted using the transceiver logic **608** and communication channel **618.** Thus, in one embodiment of a hybrid presentation system, selected content from the cached content **622** is rendered when the device attempts to exit a service.

In one embodiment, a presentation event occurs when a selected user activity occurs. For example, in one embodiment, the device user takes a selected action with respect to a service. For example, the action may comprise responding to a pop-up, selecting a particular link, or any other action. Each action is associated with an identifier. When the user performs a selected action, the client application **612** operates to process information in the system information **610** to determine if cached content should be rendered. For example, the client application **612** tests the identifier of the user action against identified actions (i.e., **416** of **FIG. 4****)** in the system information **610** to determine if there is a match. If there is a match, the system information **610** identifies content that is to be rendered (i.e., **422** of **FIG. 4****).** In one embodiment, the content is part of the cached content **620.** The client application **612** then retrieves the identified content from the cached content **622** and renders it on the device **600** using the rendering logic **604.**

In one embodiment, a presentation event occurs based on a user subscription status. For example, in one embodiment, the client application **612** determines if a selected subscription status exists for the device. For example, the client application **612** determines if the device is subscribed to services identified by the subscription status identifiers **418, 420** in the system information. For example, in one embodiment, the device comprises locally stored information that identifies the services to which the device is subscribed. That locally stored information is compared to the subscription status identifiers **418, 420** in the system information to determine the device's subscription status. If the device's subscription status matches the identifiers in the system information, then content identified by the content identifier **422** is rendered on the device. For example, the client application **612** operates to process information in the system information **610** associated with the selected subscription status. The system information **610** identifies content to be rendered that is part of the cached content **622.** The client application **612** then retrieves the identified content from the cached content **622** and renders it on the device **600** using the rendering logic **604.** Thus, it is possible for the rendering of selected cached content to be conditioned on the subscription status of the device. As a result, devices having selected subscription status may be targeted to render selected cached content. For example, devices subscribed to one or more sports related services may be targeted to render sports related advertisements.

In one embodiment, the hybrid presentation system comprises program instructions stored on a computer-readable media, which when executed by a processor, for instance, the processing logic **602,** provides the functions of the hybrid presentation system described herein. For example, instructions may be loaded into the device **600** from a computer-readable media, such as a floppy disk, CDROM, memory card, FLASH memory device, RAM, ROM, or any other type of memory device or computer-readable media. In another embodiment, the instructions may be downloaded into the device **600** from an external device or network resource that interfaces to the device **600** via the transceiver logic **608.** The instructions, when executed by the processing logic **602,** provide one or more embodiments of a hybrid presentation system as described herein.

It should be noted that the device **600** illustrates just one implementation and that other implementations are possible within the scope of the embodiments.

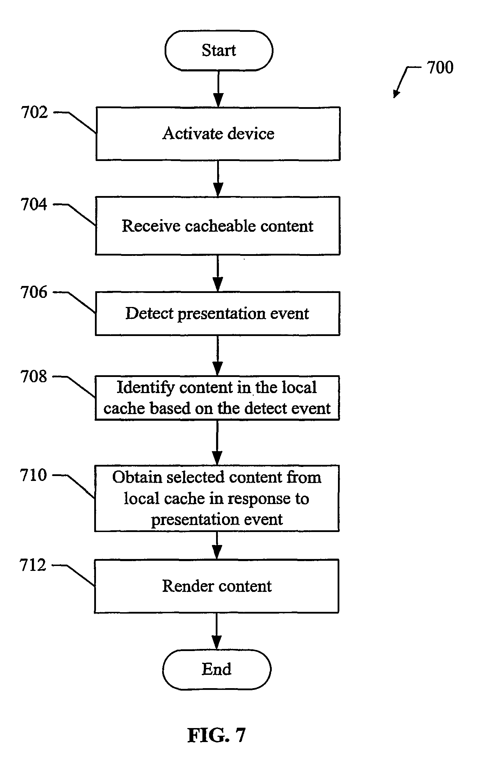

**FIG. 7** shows one embodiment of a method **700** for operating a device in one embodiment of a hybrid presentation system. For clarity, the method **700** will be described with reference to the device **600** shown in **FIG. 6****.** In one or more embodiments, the processing logic **602** executes program instructions to control the device **600** to perform the functions described below.

At block **702,** the device takes part in an activation process that allows the device to subscribe to receive available services from a network server. For example, as part of the activation process, the device **600** receives the client application **612,** the package database **614** and the system information **616** through the transceiver logic **608.**

At block **704,** cacheable content is received at the device. For example, a network server transmits cacheable content to the device **600** that is received by the transceiver logic **608** and stored as cached content **622** in the memory **606.** In one embodiment, the received cacheable content comprises content clips, programs, scripts, or any other type of cacheable information.

At block **706,** a presentation event is detected at the device. For example, the presentation event comprises one or more events that cause the client application **612** to retrieve and render content from the cached content **622.** For example, the presentation events comprise the presentation events described above. A more detailed description of the operation of block **706** is provided in the description of **FIG. 9** below.

At block **708,** based on the detected presentation event, selected content in the locally cached content is identified. For example, based on the detected presentation event, the client application **612** obtains a content identifier that identifies content in the locally cached content **622.** A more detailed description of the operation of block **708** is provided in the description of **FIG. 9** below.

At block **710,** the identified content in the locally cached content is retrieved. For example, in one embodiment, the client application **612** retrieves the identified content from the cached content **622.**

At block **712,** the retrieved content is rendered on the device. In one embodiment, the client application **612** controls the rendering logic **604** to render the retrieved cached content **622** on the device **600.**

Thus, the method **700** allows a device to operate according to one embodiment of a hybrid presentation system to render selected content from locally cached content based on a presentation event. It should be noted that the method **700** illustrates just one implementation and that changes, additions, or rearrangements of the functional elements may be made without deviating from the scope of the described embodiments.

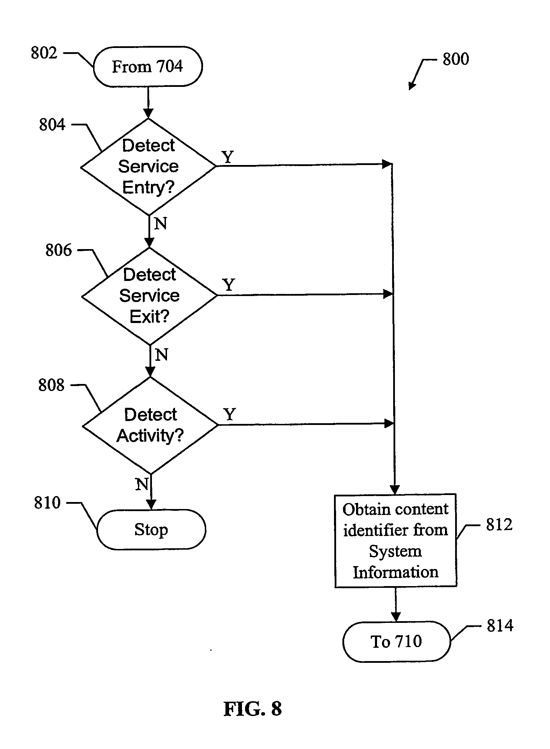

**FIG. 8** shows one embodiment of a method **800** for operating a device to detect a presentation event in one embodiment of a hybrid presentation system. For example, the method **800** is suitable for use in blocks **706** and **708** of the method **700** shown in **FIG. 7****.** In one embodiment, the method **800** is entered into from block **704** of **FIG. 7****,** as shown by block **802.**

At block **804,** a test is performed to determine if a service entry is detected. For example, a service entry occurs when the device user selects a service to receive or join from the interactive program guide provided by the client application **612.** If a service is to be entered, the method proceeds to block **814.** If a service is not to be entered, the method proceeds to block **806.**

At block **806,** a test is performed to determine if a service exit is detected. For example, a service exit occurs when the device user selects a service to exit or terminate from the interactive program guide provided by the client application **612.** If a service is to be exited, the method proceeds to block **814.** If a service is not to be exited, the method proceeds to block **808.**

At block **810,** a test is performed to determine if the user has performed a specific user activity. For example, in one embodiment, the user activity is a selected response to a request for information. In another embodiment, the user activity is based on the subscription status of the device. In one embodiment, this test is performed by the client application **612** as describe above. If the selected user activity is detected, the method proceeds to block **812.** If the selected user input is not detected, the method proceeds to block **810.**

At block **812,** selected content is retrieved from a local cache based on a content identifier located in a system information file. For example, in one embodiment, the client application **612** determines that a service entry, service exit, or a selected user activity has occurred. The client application **612** then accesses the system information **616** to obtain a content identifier associated with the selected service and based on the detected presentation event. The content identifier identifies content in the cached content **622** that is to be rendered as a result of the detected presentation event. The method then proceeds to block **710** of the method **700** where the identified cached content is retrieved and rendered.

Thus, the method **800** operates to allow a device to detect one or more presentation events in one embodiment of a hybrid presentation system. Once a presentation event has been detected, a selected content identifier is obtained that identifies selected content in locally cached content. The selected content is then rendered on the device. It should be noted that the method **800** illustrates just one implementation and that changes, additions, or rearrangements of the functional elements may be made without deviating from the scope of the described embodiments.

Accordingly, while one or more embodiments of a hybrid presentation system have been illustrated and described herein, it will be appreciated that various changes can be made to the embodiments. Therefore, the disclosures and descriptions herein are intended to be illustrative, but not limiting, of the scope of the invention, which is set forth in the following claims.

## Claims

1. A method for rendering hybrid presentations, being multimedia presentations, the method being performed in an apparatus, comprising the steps of:
caching (606, 704) one or more content items;
**characterised in that it further comprises:**
receiving at least one system information parameter from a server;
detecting (612, 706) a presentation event associated with a real-time service;
retrieving (608, 710) a selected content item from the one or more content items based on the presentation event and the at least one system information parameter; and
rendering (604, 712) the selected content item.

2. The method of claim 1, wherein said detecting comprises detecting a selection to receive the real-time service.

3. The method of claim 2, wherein said retrieving comprises retrieving the selected content item from the one or more content items based on an entry content identifier associated with the real-time service.

4. The method of claim 1, wherein said detecting comprises detecting a selection to exit the real-time service.

5. The method of claim 4, wherein said retrieving comprises retrieving the selected content item from the one or more content items based on an exit content identifier associated with the real-time service.

6. The method of claim 1, wherein said detecting comprises detecting a selected user activity associated with the real-time service.

7. The method of claim 6, wherein said retrieving comprises retrieving the selected content item from the one or more content items based on a content identifier associated with the user activity.

8. The method of claim 1, wherein said detecting comprises detecting a selected subscription status associated with the device.

9. The method of claim 8, wherein said retrieving comprises retrieving the selected content item from the one or more content items based on a content identifier associated with the selected subscription status.

10. Apparatus for rendering hybrid presentations, being multimedia presentations, the apparatus comprising:
means for caching (606, 704) one or more content items;
**characterised in that it further comprises:**
means for receiving at least one system information parameter;
means for detecting (612, 706) a presentation event associated with a real-time service;
means for retrieving (608, 710) a selected content item from the one or more content items based on the presentation event and the at least one system information parameter; and
means for rendering (604, 712) the selected content item.

11. The apparatus of claim 10, wherein said means for detecting comprises means for detecting a selection to receive the real-time service at the device.

12. The apparatus of claim 11, wherein said means for retrieving comprises means for retrieving the selected content item from the one or more content items based on an entry content identifier associated with the real-time service.

13. The apparatus of claim 10, wherein said means for detecting comprises means for detecting a selection to exit the real-time service.

14. The apparatus of claim 13, wherein said means for retrieving comprises means for retrieving the selected content item from the one or more content items based on an exit content identifier associated with the real-time service.

15. The apparatus of claim 10, wherein said means for detecting comprises means for detecting a selected user activity associated with the real-time service.

16. The apparatus of claim 15, wherein said means for retrieving comprises means for retrieving the selected content item from the one or more content items based on a content identifier associated with the user activity.

17. The apparatus of claim 10, wherein said means for detecting comprises means for detecting a selected subscription status associated with the device.

18. The apparatus of claim 17, wherein said means for retrieving comprises means for retrieving a selected content item from the one or more content items based on a content identifier associated with the selected subscription status.

19. A method for rendering hybrid presentations, being multimedia presentations, the method being performed in a server,
**characterised in that it comprises the steps of:**
generating system information parameters (202, 504) for one or more real-time services, wherein the system information parameters associate a presentation event with a cacheable content item being cached in an apparatus which renders the hybrid presentation; and
transmitting (208, 506) the system information parameters to the apparatus.

20. The method of claim 19, wherein said presentation event comprises determining an entry to a real-time service.

21. The method of claim 19, wherein said presentation event comprises determining an exit from a real-time service.

22. The method of claim 19, wherein said presentation event comprises determining a selected device user activity.

23. The method of claim 19, wherein said presentation event comprises a determining a selected device subscription status.

24. a server for enabling the rendering of hybrid presentations, being multimedia presentations, the server:
**characterised in that it comprises:**
means for generating (202, 504) system information parameters for one or more real-time services, wherein the system information parameters associate a presentation event with a cacheable content item being cached in an apparatus which renders the hybrid presentation; and
means for transmitting (208, 506) the system information parameters.

25. The server of claim 24, wherein said presentation event comprises means for determining an entry to a real-time service.

26. The server of claim 24, wherein said presentation event comprises means for determining an exit from a real-time service.

27. The server of claim 24, wherein said presentation event comprises means for determining a selected device user activity.

28. The server of claim 24, wherein said presentation event comprises means for determining a selected device subscription status.

29. A computer-readable medium comprising code for causing a computer to perform the method steps of any of the claims 1 to 9 or 19 to 23.

## Patentansprüche

1. Verfahren zum Rendern hybrider Darstellungen, die Multimediadarstellungen sind, wobei das Verfahren in einer Vorrichtung ausgeführt wird, aufweisend die Schritte:
Zwischenspeichern (606, 704) eines oder mehrerer Inhaltselemente;
**gekennzeichnet dadurch, dass** es weiterhin umfasst:
Empfangen wenigstens eines Systeminformationsparameters von einem Server;
Detektieren (612, 706) eines Darstellungsereignisses, welches mit einem Echtzeitdienst verknüpft ist;
Abfragen (608, 710) eines ausgewählten Inhaltselementes von dem einen oder den mehreren Inhaltselementen basierend auf dem Darstellungsereignis und dem wenigstens einen Systeminformationsparameter; und
Rendern (604, 712) des ausgewählten Inhaltselementes.

2. Verfahren nach Anspruch 1, wobei das Detektieren das Detektieren einer Auswahl zum Empfangen des Echtzeitdienstes umfasst.

3. Verfahren nach Anspruch 2, wobei das Abfragen das Abfragen des ausgewählten Inhaltselementes von dem einen oder den mehreren Inhaltselementen umfasst, basierend auf einer Eintrittsinhaltskennung, die mit dem Echtzeitdienst verknüpft ist.

4. Verfahren nach Anspruch 1, wobei das Detektieren das Detektieren einer Auswahl umfasst, um den Echtzeitdienst zu beenden.

5. Verfahren nach Anspruch 4, wobei das Abfragen das Abfragen des ausgewählten Inhaltselementes von dem einen oder den mehreren Inhaltselementen umfasst, basierend auf einer Austrittsinhaltskennung, die mit dem Echtzeitdienst verknüpft ist.

6. Verfahren nach Anspruch 1, wobei das Detektieren das Detektieren einer ausgewählten Benutzeraktivität umfasst, welche mit dem Echtzeitdienst verknüpft ist.

7. Verfahren nach Anspruch 6, wobei das Abfragen das Abfragen des ausgewählten Inhaltselementes von dem einen oder den mehreren Inhaltselementen umfasst, basierend auf einer Inhaltskennung, die mit der Benutzeraktivität verknüpft ist.

8. Verfahren nach Anspruch 1, wobei das Detektieren das Detektieren eines ausgewählten Abonnementstatus umfasst, der mit dem Gerät verknüpft ist.

9. Verfahren nach Anspruch 8, wobei das Abfragen das Abfragen des ausgewählten Inhaltselementes von dem einen oder den mehreren Inhaltselementen umfasst, basierend auf einer Inhaltskennung, die mit dem ausgewählten Abonnementstatus verknüpft ist.

10. Vorrichtung zum Rendern hybrider Darstellungen, die Multimediadarstellungen sind, wobei die Vorrichtung aufweist:
Mittel zum Zwischenspeichern (606, 704) eines oder mehrerer Inhaltselemente;
**gekennzeichnet dadurch, dass** sie weiterhin umfasst:
Mittel zum Empfangen wenigstens eines Systeminformationsparameters;
Mittel zum Detektieren (612, 706) eines Darstellungsereignisses, welches mit einem Echtzeitdienst verknüpft ist;
Mittel zum Abfragen (608, 710) eines ausgewählten Inhaltselementes von dem einen oder den mehreren Inhaltselementen, basierend auf dem Darstellungsereignis und dem wenigstens einen Systeminformationsparameter; und
Mittel zum Rendern (604, 712) des ausgewählten Inhaltselementes.

11. Vorrichtung nach Anspruch 10, wobei die Mittel zum Detektieren Mittel zum Detektieren einer Auswahl umfassen, um den Echtzeitdienst auf dem Gerät zu empfangen.

12. Vorrichtung nach Anspruch 11, wobei die Mittel zum Abfragen Mittel zum Abfragen des ausgewählten Inhaltselementes von dem einen oder den mehreren Inhaltselementen umfassen, basierend auf einer Eintrittsinhaltskennung, die mit dem Echtzeitdienst verknüpft ist.

13. Vorrichtung nach Anspruch 10, wobei die Mittel zum Detektieren Mittel zum Detektieren einer Auswahl zum Beenden des Echtzeitdienstes umfassen.

14. Vorrichtung nach Anspruch 13, wobei die Mittel zum Empfangen Mittel zum Empfangen des ausgewählten Inhaltselementes von dem einen oder den mehreren Inhaltselementen umfassen, basierend auf einer Austrittsinhaltskennung, die mit dem Echtzeitdienst verknüpft ist.

15. Vorrichtung nach Anspruch 10, wobei die Mittel zum Detektieren Mittel zum Detektieren einer ausgewählten Benutzeraktivität umfassen, die mit dem Echtzeitdienst verknüpft sind.

16. Vorrichtung nach Anspruch 15, wobei die Mittel zum Empfangen Mittel zum Empfangen des ausgewählten Inhaltselementes von dem einen oder den mehreren Inhaltselementen umfassen, basierend auf einer Inhaltskennung, die mit der Benutzeraktivität verknüpft ist.

17. Vorrichtung nach Anspruch 10, wobei die Mittel zum Detektieren Mittel zum Detektieren eines ausgewählten Abonnementstatus umfassen, der mit dem Gerät verknüpft ist.

18. Vorrichtung nach Anspruch 17, wobei die Mittel zum Empfangen Mittel zum Empfangen eines ausgewählten Inhaltselementes von dem einen oder den mehreren Inhaltselementen umfassen, basierend auf einer Inhaltskennung, die mit dem ausgewählten Abonnementstatus verknüpft ist.

19. Verfahren zum Rendern hybrider Darstellungen, die Multimediadarstellungen sind, wobei das Verfahren in einem Server durchgeführt wird, **dadurch gekennzeichnet, dass** es die folgenden Schritte umfasst:
Erzeugen von Systeminformationsparametern (202, 504) für einen oder mehrere Echtzeitdienste, wobei die Systeminformationsparameter ein Darstellungsereignis mit einem zwischenspeicherbaren Inhaltselement verknüpfen, welches in einer Vorrichtung zwischengespeichert ist, welche die hybride Darstellung rendert; und
Übertragen (208, 506) der Systeminformationsparameter an die Vorrichtung.

20. Verfahren nach Anspruch 19, wobei das Darstellungsereignis die Bestimmung eines Eintritts in einen Echtzeitdienst umfasst.

21. Verfahren nach Anspruch 19, wobei das Darstellungsereignis die Bestimmung eines Austritts aus einem Echtzeitdienst umfasst.

22. Verfahren nach Anspruch 19, wobei das Darstellungsereignis die Bestimmung einer ausgewählten Gerätebenutzeraktivität umfasst.

23. Verfahren nach Anspruch 19, wobei das Darstellungsereignis die Bestimmung eines ausgewählten Geräteabonnementstatus umfasst.

24. Ein Server zum Ermöglichen des Renderns von hybriden Darstellungen, die Multimediadarstellungen sind, wobei der Server **dadurch gekennzeichnet ist, dass** er aufweist:
Mittel zum Erzeugen (202, 504) von Systeminformationsparametern für einen oder mehrere Echtzeitdienste, wobei die Systeminformationsparameter ein Darstellungsereignis mit einem zwischenspeicherbaren Inhaltselement verknüpfen, welches in einer Vorrichtung zwischengespeichert ist, welche die hybride Darstellung rendert; und
Mittel zum Übertragen (208, 506) der Systeminformationsparameter.

25. Server nach Anspruch 24, wobei das Darstellungsereignis Mittel zum Bestimmen eines Eintritts in einen Echtzeitdienst umfasst.

26. Server nach Anspruch 24, wobei das Darstellungsereignis Mittel zum Bestimmen eines Austritts aus einem Echtzeitdienst umfasst.

27. Server nach Anspruch 24, wobei das Darstellungsereignis Mittel zum Bestimmen einer ausgewählten Gerätebenutzeraktivität umfasst.

28. Server nach Anspruch 24, wobei das Darstellungsereignis Mittel zum Bestimmen eines ausgewählten Geräteabonnementstatus umfasst.

29. Computerlesbares Medium aufweisend Code zum Veranlassen eines Computers zum Durchführen der Verfahrensschritte von einem beliebigen der Ansprüche 1 - 9 oder 19 - 23.

## Revendications

1. Un procédé de restitution de présentations hybrides, qui sont des présentations multimedia, le procédé étant mis en oeuvre dans un dispositif, comprenant les étapes suivantes :
la mise en cache (606, 704) d'un ou plusieurs éléments de contenu ;
**caractérisé en ce qu'**il comprend en outre :
la réception d'au moins un paramètre d'information système en provenance d'un serveur ;
la détection (612, 706) d'un événement de présentation associé à un service en temps réel ;
la récupération (608, 710) d'un élément de contenu sélectionné parmi les un ou plusieurs éléments de contenu sur la base de l'événement de présentation et du au moins un paramètre d'information système ; et
la restitution (604, 712) de l'élément de contenu sélectionné.

2. Le procédé de la revendication 1, dans lequel ladite détection comprend la détection d'une sélection pour recevoir le service en temps réel.

3. Le procédé de la revendication 2, dans lequel ladite récupération comprend la récupération de l'élément de contenu sélectionné parmi les un ou plusieurs éléments de contenu sur la base d'un identifiant de contenu d'inscription associé au service en temps réel.

4. Le procédé de la revendication 1, dans lequel ladite détection comprend la détection d'une sélection pour sortie du service en temps réel.

5. Le procédé de la revendication 4, dans lequel ladite récupération comprend la récupération de l'élément de contenu sélectionné parmi les un ou plusieurs éléments de contenu sur la base d'un identifiant de contenu de sortie associé au service en temps réel.

6. Le procédé de la revendication 1, dans lequel ladite détection comprend la détection d'une activité utilisateur sélectionnée associée au service en temps réel.

7. Le procédé de la revendication 6, dans lequel ladite récupération comprend la récupération de l'élément de contenu sélectionné parmi les un ou plusieurs éléments de contenu sur la base d'un identifiant de contenu associé à l'activité utilisateur.

8. Le procédé de la revendication 1, dans lequel ladite détection comprend la détection d'un statut d'abonnement sélectionné associé au dispositif.

9. Le procédé de la revendication 8, dans lequel ladite récupération comprend la récupération de l'élément de contenu sélectionné parmi les un ou plusieurs éléments de contenu sur la base d'un identifiant de contenu associé au statut d'abonnement sélectionné.

10. Dispositif de restitution de présentations hybrides, qui sont des présentations multimedia, le dispositif comprenant :
des moyens de mise en cache (606, 704) d'un ou plusieurs éléments de contenu ;
**caractérisé en ce qu'**il comprend en outre :
des moyens de réception d'au moins un paramètre d'information système en provenance d'un serveur ;
des moyens de détection (612, 706) d'un événement de présentation associé à un service en temps réel ;
des moyens de récupération (608, 710) d'un élément de contenu sélectionné parmi les un ou plusieurs éléments de contenu sur la base de l'événement de présentation et du au moins un paramètre d'information système ; et
des moyens de restitution (604, 712) de l'élément de contenu sélectionné.

11. Le dispositif de la revendication 10, dans lequel lesdits moyens de détection comprennent des moyens de détection d'une sélection pour recevoir le service en temps réel sur le dispositif.

12. Le dispositif de la revendication 11, dans lequel lesdits moyens de récupération comprennent des moyens de récupération de l'élément de contenu sélectionné parmi les un ou plusieurs éléments de contenu sur la base d'un identifiant de contenu d'inscription associé au service en temps réel.

13. Le dispositif de la revendication 10, dans lequel lesdits moyens de détection comprennent des moyens de détection d'une sélection pour sortie du service en temps réel.

14. Le dispositif de la revendication 13, dans lequel lesdits moyens de récupération comprennent des moyens de récupération de l'élément de contenu sélectionné parmi les un ou plusieurs éléments de contenu sur la base d'un identifiant de contenu de sortie associé au service en temps réel.

15. Le dispositif de la revendication 10, dans lequel lesdits moyens de détection comprennent des moyens de détection d'une activité utilisateur sélectionnée associée au service en temps réel.

16. Le dispositif de la revendication 15, dans lequel lesdits moyens de récupération comprennent des moyens de récupération de l'élément de contenu sélectionné parmi les un ou plusieurs éléments de contenu sur la base d'un identifiant de contenu associé à l'activité utilisateur.

17. Le dispositif de la revendication 10, dans lequel lesdits moyens de détection comprennent des moyens de détection d'un statut d'abonnement sélectionné associé au dispositif.

18. Le dispositif de la revendication 17, dans lequel lesdits moyens de récupération comprennent des moyens de récupération d'un élément de contenu sélectionné parmi les un ou plusieurs éléments de contenu sur la base d'un identifiant de contenu associé au statut d'abonnement sélectionné.

19. Un procédé de restitution de présentations hybrides, qui sont des présentations multimedia, le procédé étant mis en oeuvre dans un serveur,
**caractérisé en ce qu'**il comprend les étapes suivantes :
la génération de paramètres d'information système (202, 504) pour un ou plusieurs services en temps réel, les paramètres d'information système associant un événement de présentation à un élément de contenu susceptible d'être mis en cache qui est mis en cache dans un dispositif qui restitue la présentation hybride ; et
l'émission (208, 506) des paramètres d'information système vers le dispositif.

20. Le procédé de la revendication 19, dans lequel ledit événement de présentation comprend la détermination d'une inscription à un service en temps réel.

21. Le procédé de la revendication 19, dans lequel ledit événement de présentation comprend la détermination d'une sortie d'un service en temps réel.

22. Le procédé de la revendication 19, dans lequel ledit événement de présentation comprend la détermination d'une activité utilisateur du dispositif sélectionné.

23. Le procédé de la revendication 19, dans lequel ledit événement de présentation comprend une détermination d'un statut d'abonnement du dispositif sélectionné.

24. Un serveur pour permettre la restitution de présentations hybrides, qui sont des présentations multimedia, le serveur étant **caractérisé en ce qu'**il comprend :
des moyens de génération de paramètres d'information système (202, 504) pour un ou plusieurs services en temps réel, les paramètres d'information système associant un événement de présentation à un élément de contenu susceptible d'être mis en cache qui est mis en cache dans un dispositif qui restitue la présentation hybride ; et
des moyens d'émission (208, 506) des paramètres d'information système vers le dispositif.

25. Le serveur de la revendication 24, dans lequel ledit événement de présentation comprend des moyens de détermination d'une inscription à un service en temps réel.

26. Le serveur de la revendication 24, dans lequel ledit événement de présentation comprend des moyens de détermination d'une sortie d'un service en temps réel.

27. Le serveur de la revendication 24, dans lequel ledit événement de présentation comprend des moyens de détermination d'une activité utilisateur du dispositif sélectionné.

28. Le serveur de la revendication 24, dans lequel ledit événement de présentation comprend des moyens de détermination d'un statut d'abonnement du dispositif sélectionné.

29. Un support lisible par calculateur comprenant du code pour faire en sorte qu'un calculateur mette en oeuvre les étapes de procédé de l'une des revendications 1 à 9 ou 19 à 23.
